Europäisches Patentamt

European Patent Office

Office européen des brevets

(11) Publication number: **0 053 115**
**B1**

# EUROPEAN PATENT SPECIFICATION

(45) Date of publication of patent specification: **18.09.85**

(51) Int. Cl.⁴: **B 01 D 29/08,** B 01 D 33/00

(21) Application number: **81900490.4**

(22) Date of filing: **20.02.81**

(86) International application number:
**PCT/SE81/00047**

(87) International publication number:
**WO 81/02393 03.09.81 Gazette 81/21**

(54) **LIQUID FILTERING APPARATUS.**

(30) Priority: **26.02.80 SE 8001478**

(43) Date of publication of application:
**09.06.82 Bulletin 82/23**

(45) Publication of the grant of the patent:
**18.09.85 Bulletin 85/38**

(84) Designated Contracting States:
**AT CH DE FR GB LI NL SE**

(56) References cited:
**FR-B-1 232 499**
**SE-B- 378 361**
**SE-B- 396 552**
**US-A-2 057 887**

(73) Proprietor: **MÖLLER, Bengt Ake Karl**
**23 Käbäcksvägen**
**S-433 38 Partille (SE)**

(72) Inventor: **MÖLLER, Bengt Ake Karl**
**23 Käbäcksvägen**
**S-433 38 Partille (SE)**

(74) Representative: **Onn, Thorsten et al**
**AB Stockholms Patentbyra Zacco & Bruhn P.O.**
**Box 3129**
**S-103 62 Stockholm (SE)**

Courier Press, Leamington Spa, England.

## Description

This invention relates to an apparatus for filtering a liquid through a movable filter bed consisting of granular material, which is scavenged continuously.

A filtering technique in this connection implies that a liquid containing dissolved and solid impurities is passed through a bed of granular material, usually sand, whereby material suspended in the liquid is separated and remains in the bed. By special inserts also substances dissolved in the liquid can be flocculated out prior to or in the filter and thereafter be separated therein.

Filtering normally takes place in a stationary bed with vertically directed flow and, owing to the separation of impurities, with ever increasing filter resistance, After a certain time the filtering operation is interrupted, and the bed is scavenged with liquid, in certain cases with liquid and air.

During the scavenging process relatively large amounts of water is consumed, which are recovered for being cleaned. The scavenging process further requires special installations in the form of pumps, valves, pipes, automatic equipment etc., to an extent which in relation to the installation required for filtering is considerable.

In order to avoid interruption for scavenging and to reduce the extent of the scavenging equipment, a known technique has been developed which applies a movable filter bed, the material of which is scavenged continuously and successively, and at which the scavenged material is returned to the movable bed. The polluted filter material is removed from the lower portion of the bed together with liquid and is transported by pumping to a washing plant, from which cleaned bed material is returned to the bed, and dirty scavenging liquid is directed away to be cleaned.

In a known apparatus (SE B 409 819) the filtering takes place with a downward flow, in the case of a horizontally circular bed with a radial flow as well, in the bed to a vertical outlet screen in direct contact with the filter bed material. The filter bed is encased in a tank with essentially vertical walls. The washing of polluted filter material is carried out with transport liquid and incoming unfiltered liquid. Due to the movements of the bed, this method implies that the filter material closest to the outlet screen can contain impurities to such an amount that the possibility of the certain discharge thereof with the outgoing liquid cannot be excluded. The openings in the outlet screen, which are small in view of the grain size of the filter bed material, also are subject to the risk of filter clogging.

In another known apparatus described in DE—A—2 708 340 (SE B 396 552) the filtering takes place with upward vertical flow in the bed to a liquid volume located above the bed surface, from which volume cleaned liquid is drained through grooves in the liquid surface. The transport of polluted filter material is carried out from the lowest part of the filter bed to a washing and distributing device above the bed surface. The washing is carried out with transport liquid and outgoing filtered liquid. The washed bed material is returned to the bed through the filtered liquid volume above the bed surface. This implies the possibility that dirt is transferred to the outgoing liquid when the material washing is not satisfactory.

In a third known apparatus (US A 2 057 887) the filtering takes place in a column of sand or other granular filtering medium of substantial height with a slow downward flow of the filtering medium through a vertical casing. Filtration takes place in two zones, a primary zone of filtration (filtration being downward) and a secondary zone of filtration (filtration being upward). In the secondary zone of filtration the liquid moves through the downwardly moving column of filtering medium in the vertical casing, passage being in countercurrent. Thus the essential flow direction is vertical and upwards. In the apparatus- — like in most filters of the similar type — there occur — for technical reasons of distribution and collection of liquid — limited zones near the in- and outlets with more complicated flow patterns than that predominant in the main part of the filter bed. In view of function and capacity, however, the apparatus is to be classified as an upward, vertical flow filter.

In a fourth known apparatus (DE A 2 126 631) the filtering takes place in a vertical, closed tank with in- and outlets to the active filtration zone through foraminous walls along the total height of this zone. In operation there is a continuous downward flow of filter bed material, through which the liquid to be filtered passes with a horizontal flow at a right angle to the flow of the bed material. Thus the apparatus is to be classified as a horizontal, two-dimensional or radial flow filter. The filter capacity is calculated as the product of the free outlet area and the maximum permissible flow velocity in order to avoid break-through of impurities, which in turn is dependent on bed material composition, filter flow length and the type of impurities to be separated in the filter bed.

All four apparatuses described have in common that the liquid required for material transport and washing is drained from the system after having been used only once. In view of this last mentioned fact, the applicablity of these apparatuses is restricted for the reasons as follows.

The transport of granular material in a liquid presupposes a flow rate in the liquid which is adjusted to the material. When a transport liquid is being used only once, it is essential that its amount can be maintained in a reasonable proportion in relation to the filtered liquid amount, which limits the size of the transport conduits. It is further essential to state that the size of coarser impurities, which can be supplied to a filter, depends not only on the design of the infeed devices but also of the pipes, in which the impurities together with the bed material are to be transported after separation in the filter bed.

The intention of the present invention is to eliminate the aforesaid disadvantages of the apparatuses described above. Hereby the following advantages are obtained:

The filtering zone portion located closest to the outlet is always the clearest one,

the outlet is entirely open and not limited by screens and the like,

bed material returned after cleaning does not pass through any zone of outgoing filtered water prior to the storage in the bed,

the active filter bed volume is disposed in a way that results in increased filter capacity,

the cleaning of polluted bed material takes place in several steps,

the greater part of liquid used for material transport is recirculated, and

all impurities, which possibly can be supplied to the filter, can also be removed therefrom via the system for transport and washing of polluted bed material.

Brief Description of the Drawings

The invention is described in greater detail in the following with reference to the accompanying schematic drawing of a filter according to the present invention.

Detailed Description of the Preferred Embodiment

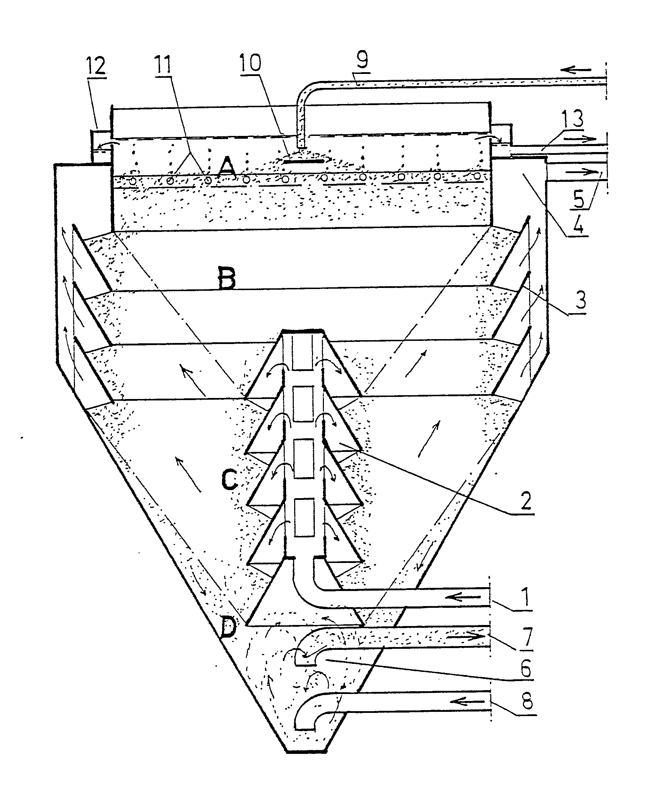

The filter shown in the drawing comprises with respect to its functioning the following zones, counted from above:

Zone A   Final washing zone for the final cleaning of returned bed material and distribution thereof over the entire bed surface.

Zone B   Storage zone for cleaned bed material.

Zone C   Filtering zone.

Zone D   Transport zone for polluted bed material.

As to its structural design, the filter comprises an upper cylindrical or rectangular portion and a funnel shaped portion located below.

Ingoing liquid is supplied to the filter via an inlet conduit 1 to an inlet column 2 which is located centrally in the filtering zone C and in the lower part of the filter body. The liquid flows from this zone upward and outward through the filtering zone to overlapping baffles located in the filter walls and continues from said devices to an outlet chamber 4 and further to an oulet conduit 5.

The material suspended in the liquid and separated in the filtering zone on the first hand is concentrated to the filtering zone portion located closest to the inlet and is transported at a successively decreasing extent to the outer portions of the zone.

The inlets and outlets are formed with inclined discs — baffles — which are positioned so that a distinct defining surface between filter bed and liquid is obtained.

In operation the filter bed moves continuously downward, whereby the bed material in the filtering zone C successively is replaced by clean bed material from the zone B.

From the filtering zone the polluted bed material passes over to the transport zone D and is transported therein to a space 6, which is located furthest down in the filter and is defined by the shell of the bottom funnel and the lower baffle of the inlet column 2. Two conduits open into the space 6, viz. an outlet pipe 7 for removing polluted bed material and transport liquid, and an inlet pipe 8 for returning transport liquid. Owing to the recirculation, a strong turbulence is affected in the space 6, as a result of which the bed material supplied from the transport zone is fluidized. This in its turn brings about a first scavenging of the bed material from pollutions.

Through the outlet pipe 7 polluted bed material and transport liquid are transferred to a closed sand washing equipment of some known design, which is located outside the filter and completed with a coarse screen for separating coarse impurities. The greater part of the transport liquid is pumped from the sand washing plant through the inlet pipe 8 again to the filter. Bed material separated in the sand washing plant and, thus, having been passed through a second washing step, is pumped with a small amount of transport liquid via a delivery pipe 9 and a distributor 10 to the final washing zone A located in the uppermost portion of the filter. In the washing zone the bed material is washed a third time and distributed over the entire bed surface, in that the liquid volume located above the bed surface is stirred by air, which is supplied through an air distribution system 11 located beneath the bed surface and close thereto. The cleaned bed material is passed over to the storage zone B. The transport liquid is conducted away together with possible remaining dirt through an overflow to a transport liquid groove 12 and further via a transport liquid conduit 13 whereafter it is cleaned. The loss from the recirculation system for transport liquid of the filter due to the removal of the small amount of transport liquid is compensated for automatically from the filter.

The liquid level in the final washing zone is balanced against the liquid pressures in the inlets and outlets of the filter so that liquid exchange between the final washing zone A and the storage zone B is prevented.

Claim

An apparatus for filtering fluid through a movable bed of filtering material in a tank with an upper circular or rectangular section, having vertical side walls, and an inverted cone-shaped bottom section, the tank containing:

a slotted, vertical inlet column (2) in the centre of the tank for feed to the filter bed of fluid to be filtered, connected to an inlet conduit (1) and separated from the filter bed material by a series of frustro conical flow distributors attached to the column and overlapping each other to prevent escape of bed material into the column,

an outlet chamber (4) substantially completely defined within said upper section vertical side walls for discharge of filtered fluid from the filter bed and separated from the filter bed by a series of inclined, overlapping baffles (3) to prevent escape of bed material into the chamber and connected to an outlet conduit (5) for discharge of filtered fluid from the apparatus,

a defined space (6) at the very bottom of the tank and below the inlet column (2) for collecting contaminated bed material, the space being provided with an outlet pipe (7) for discharge of contaminated bed material, said outlet pipe (7) being connected to an external bed washing system, said system having a return line for cleansed bed material connected to a delivery pipe (9) for supply of clean bed material together with bed material transport liquid,

a filter bed material enclosed between the inlet column (2) and the outlet chamber (4),

characterised in that, the inlet column (2) is situated substantially entirely within the said bottom section and with substantially all openings to the filter bed below the lowest level of the openings from the filter bed to the outlet chamber (4), this relative orientation of in- and outlets forcing the fluid to be filtered to pass through the filter bed with an overall inclined, upwards and outwards flow, and in that a distributor (10) is provided in the centre of the tank and above the bed surface for distributing bed material, said distributor being supplemented by a diffused air distribution system (11) in the bed surface, and outlets for transport liquid along the side walls of the tank communicating with a transport liquid effluent pipe (13), and in that said washing system is connected to an inlet pipe (8) to said defined space (6) for return of a major part of the transport liquid removed via the outlet pipe (7), said system in use discharging a minor part of said transport liquid with said cleansed bed material into said return line for return to said delivery pipe (9).

**Patentanspruch**

Vorrichtung zum Filtrieren von Flüssigkeiten durch ein bewegbares Filterbett aus Filtermaterial, das sich in einem Behälter befindet, der einen oberen kreisförmigen oder rechteckigen Abschnitt mit vertikalen Seitenwandungen und einen uteren bodennahen Abschnitt in Form eines umgekehrten Kegels umfaßt und folgende Teile beinhaltet:

eine mit Schlitzen versehene vertikale Einlaßsäule (2) zum Einspeisen der zu filtrierenden Flüssigkeit in das Filterbett, die sich in dem Zentrum des Behälters befindet und vom dem Material des Filterbetts durch eine Reihe von kegelstumpfförmigen Strömungsverteilern getrennt ist, die an der Säule befestigt sind und einander überlappen, um einen Austritt von Filterbettmaterial in die Säule zu verhindern,

eine Auslaßkammer (4), die im wesentlichen volständig innerhalb der vertikalen Seitenwandungen des oberen Abschnitts und von diesèm begrenzt angeordnet ist und dei zur Abgabe der von dem Filterbett gefilterten Flüssigkeit dient, wobei diese Kammer (4) von dem Filterbett durch eine Reihe von geneigt angeordneten, einander überlappenden Leitwänden getrennt ist, die einen Austritt von Filterbettmaterial in die Kammer (4) verhindern, und wobei die Kammer mit einer Auslaßleituung (5) verbunden ist, über die gefilterte Flüssigkeit aus der Vorrichtung abführbar ist,

einen im Bodenbereich des Behälters unter der Einlaßsäule (2) angeordneten Sammelraum (6) zum Sammeln von verschmutztem Filterbettmaterial, der mit einem Auslaßrohr (7) zur Agabe von verschmutztem Filtermaterial versehen ist, wobei dieses Auslaßrohr (7) mit einem externen Filterbett-Waschsystem verbunden ist, das eine Rückführleitung für gereinigtes Filterbettmaterial aufweist, die an ein Zuführungsrohr (9) angeschlossen ist, über welches sauberes Filterbettmaterial mit einer Materialtransportflüssigkeit zuführbar ist,

sowie Filterbettmaterial in dem Bereich zwischen der Einlaßsäule (2) und der Auslaßkammer (4),

dadurch gekennzeichnet,

daß die Einlaßsäule (2) im wesentlichen vollständig innerhalb des bodennahen Abschnitts liegt, wobei im wesentlichen alle in das Filterbett führenden Öffnungen sich unter dem niedrigsten Niveau der von dem Filterbett in die Auslaßkammer führenden Öffnungen befinden und wobei diese relative Orientierung der Ein- und Auslässe die zu filterndee Flüssigkeit zu einem Strömungsweg durch das Filterbett zwingt, der insgesamt nach oben und außen geneigt verläuft,

daß im Zentrum des Behälters über der Oberfläche des Filterbetts ein Verteiler (10) zur Verteilung von Filterbettmaterial angeordnet ist, der ergänzt wird durch ein in der Oberfläche des Filterbett verteilt angeordnetes Luftverteilungssystem (11) und durch längs der Seitenwandungen des Behälters angeordnete Auslässe für Transportflüssigkeit, die mit einem Zuflußrohr (13) für Transportflüssigkeit verbunden sind,

und daß das Waschsystem mit einem zu dem genannten begrenzten Sammelraum führenden Einlaßrohr zur Rückspeisung eines größeren Teils der durch das Auslaßrohr (7) weggeführten Transportflüssigkeit verbunden ist, wobei das System während des Betriebs der Vorrichtung einen kleineren Teil Transportflüssigkeit mit dem genannten gereinigten Filterbettmaterial zur Rückgabe an das Einspeiserohr (9) an die genannte Rückführleitung abgibt.

**Revendication**

Appareil de filtration de liquides au moyen d'un lit filtrant mobile en matériel filtrant, qui se trouve dans une caisse avec une section supérieure circulaire ou rectangulaire ayant des parois late-1raux verticaux, et une section de fond en forme d'un ĉone inverse, la caisse contenant:

une colonne verticale d'entrée (1), raccordée à une conduite d'entrée et située au centre de la caisse et munie de fentes, cette colonne étant prevue pour alimenter au lit filtrant du liquide à filtrer, et étant séparée du matériél du lit filtrant par une série de distributeurs de courant en forme de cône tronqué, fixés à la colonne et recouvrant les uns les autres pour éviter que le matériél du lit filtrant s'échappe dans la colonne,

une chambre de sortie (4) definie substantiellement complètement au dedans des parois verticaux de ladite section supérieure, cette chambre servant à decharger le liquide filtré par le lit filtrant et étant separée de celui-ci par une série de déflecteurs inclinés et récouvrant les uns les autres pour éviter que le materiel du lit filtrant s'échappe dans ladite chambre, cette chambre étant en outre raccordée à une conduit (5) de sortie pour conduire le liquide filtre en dehors de l'appareil,

un espace (6) au fond de la caisse et au dessous de la colonne (2) d'entrée servant à collecter le matériel contaminé du lit filtrant, cet espace étant pourvu d'un tube (7) de sortie pour le matériel contaminé du lit filtrant, ce tube étant raccordé à un système externe de lavage du lit, ce système de lavage présentant un conduit de retour du matériel purifié du lit, raccordé à un tube (9) d'alimentation par lequel du matériel propre du lit filtrant peut être apporté au moyen d'un liquide transporteur,

un filtre constitué de matériel du lit et agencé entre la colonne d'entrée et la chambre de sortie, characterisé

en ce que la colonne d'entrée (2) est située substantiellement complètement au dedans de la section de fond, substantiellement tous les orifices de la colonne, qui s'ouvrent vers le lit filtrant, se trouvant au dessous du niveau le plus bas des orifices du dit lit s'ouvrant vers la chambre de sortie, cette orientation des entrées et des sorties forcant le liquide à filtrer à traverser le lit filtrant en courant géneralement incliné vers le haut et en dehors,

en ce que un distributeur (10) est agencé au centre de la caisse au dessous de la surface du lit filtrant pour distribuer le matériel du lit, ce distributeur étant supléé par un système (11) de distribution d'air diffusé dans la surface du lit filtrant et par des sorties de liquide transporteur agencées le long des parois latéraux de la caisse et communiquant avec un tube (13) d'affluence du liquide transporteur,

et en ce que ledit système de lavage est raccordé à un tube d'entrée (8) dudit espace (6) défini pour ramener la plus grande part du liquide transporteur enlevé par ledit tube de sortie (7), le système en fonctionnement déchargeant un part mineur du dit liquide transporteur avec ledit matériel purifié du lit dans le conduit de retour afin de ramener celui au tube (9) d'alimentation.